# EUROPEAN PATENT APPLICATION

(11) **EP 1 603 212 A2**
(43) Date of publication of application: **07.12.2005**
(21) Application number: 05253414.6
(22) Date of filing: 03.06.2005
(51) Int. Cl.: H02J 7/00

(54) **Cell Balancing circuit**

(30) Priority: 05.06.2004 US 861142
(71) Applicant: MOTOROLA, INC., Schaumburg, IL 60196 (US)
(72) Inventor: Geren, Michael D., Suwanee GA 30024 (US); Oglesbee, John W., Watkinsville GA 30677 (US); Hermann, John E., Sugar Hill GA 30518 (US); Smith, Stephanie E., Norcross GA 30092 (US); Boyer, Roger L., Snellville GA 30078 (US)
(74) Representative: McLeish, Nicholas Alistair Maxwell

(57) **Abstract**

A cell balancing circuit monitors the voltage between serially connected cells and compares it to a reference voltage. From that comparison, the cell balancing circuit sources or sinks current into a midpoint node between rechargeable cells to keep the cells balanced during the charging process. In one preferred embodiment, the cell balancing circuit includes an op-amp, connected in a unity gain configuration. A voltage divider establishes a reference voltage equal to the average of the two cell voltages. The op-amp compares this average to the measured voltage at the midpoint node. When the average voltage exceeds the voltage at the midpoint node, the op-amp sources current into the midpoint node. When the average voltage falls below the voltage at the midpoint node, the op-amp sinks current from the midpoint node. By sourcing or sinking current, the cell balancing circuit allows the lesser charged cell to catch up with the more fully charged cell.

## Description

### BACKGROUND

### TECHNICAL FIELD

This invention relates generally to rechargeable battery packs, and more particularly to a circuit for balancing the voltages of serially coupled cells within a rechargeable battery pack.

### BACKGROUND ART

Most portable electronic devices today, like cellular telephones, MP3 players, pagers, radios and portable computers, rely on rechargeable batteries for power. While some people may consider these power sources to be just a single cell wrapped in plastic, nothing could be farther from the truth. In practice, rechargeable battery packs are complex devices that include not only electrochemical cells, but control circuitry and intricate mechanical components as well.

The energy source within a rechargeable battery is the electrochemical cell. While some devices, like cellular phones, may use battery packs that have one cell within, other devices, like laptop computers, often use battery packs having 4, 5 or even 6 or more cells.

When multiple cells are employed, they are often connected in series to increase the overall output voltage of the battery pack. Series cells are charged by a single current that flows through both cells. One problem associated with serial cell configurations is known as "cell imbalance". This occurs when one cell in a series string charges faster or slower than the others. When this happens, faster charging cells reach full charge sooner that the slow cells. Since the only way to stop the charging of the fully charged cells is to stop the single current flowing through the series string of cells, the overall charging process terminates before the slow cells are fully charged. This unbalanced state compromises the performance of the overall battery pack.

One prior art solution to this unbalanced problem is to place a passive, switched bypass path (like a transistor) about each cell in a serial string. When one cell starts charging faster than another, a switch causes the current to bypass the faster cell until the slow cell catches up. In other words, the bypass switch stops the charging of faster cell until the slow cell reaches the same charge, and then allows the faster cell to begin charging again. If the faster cell gets ahead again, the bypass switch re-stops it until the other cells catch up. This start/stop, intermittent process continues until the battery pack is charged.

The problem with this prior art solution is that it is inefficient. Due to the bypass switch action, some cells are taken out of the charge path while others catch up. As a result the overall charging process gets long and slow. There is thus a need for an improved cell-balancing circuit that reduces the overall charge time of rechargeable battery packs.

### BRIEF DESCRIPTION OF THE DRAWINGS

FIG. 1 illustrates one preferred embodiment of a cell balancing circuit in accordance with the invention.
FIG. 2 illustrates one preferred embodiment of a partial cell balancing circuit in accordance with the invention.
FIG. 3 illustrates another preferred embodiment of a partial cell balancing circuit in accordance with the invention.
FIG. 4 illustrates one preferred embodiment of a cell balancing circuit for a plurality of cells in accordance with the invention.
FIG. 5 illustrates one preferred embodiment of a partial cell balancing circuit for a plurality of cells in accordance with the invention.
FIGS. 6 and 7 are schematic diagrams of cell balancing circuits in accordance with the invention.

### DETAILED DESCRIPTION OF THE INVENTION

A preferred embodiment of the invention is now described in detail. Referring to the drawings, like numbers indicate like parts throughout the views. As used in the description herein and throughout the claims, the following terms take the meanings explicitly associated herein, unless the context clearly dictates otherwise: the meaning of "a," "an," and "the" includes plural reference, the meaning of "in" includes "in" and "on."

This invention provides an active cell balancing circuit, that can be employed within a battery pack, which is able to either source or sink current into nodes between serially coupled cells, thereby balancing the charging without removing any of the cells from the overall charging process. In effect, the circuit charges the slower cells faster and the faster cells more slowly, thereby increasing the overall efficiency of the charging process, without removing cells from the system. Since all cells are charging throughout the process, the overall charge time is reduced.

One embodiment of the invention employs an op-amp to perform the fundamental balancing function. The op-amp monitors and compares a voltage between serially coupled cells with an average of the voltage across the serially coupled cells. (The average voltage may be established, for example, by a voltage divider across the serially coupled cells.) The op-amp, set in a unity gain configuration in one preferred embodiment, is then capable of sourcing or sinking current into the midpoint node between the cells to keep the cells balanced during charging.

When the average cell voltage exceeds the voltage at a midpoint node between the cells, current is sourced out of the op-amp into the midpoint node. This sourcing causes the bottom cell to charge more rapidly that the upper cell. When the average cell voltage falls below the voltage between the cells, the op-amp sinks current from the midpoint node, thereby slowing the overall charge rate of the upper cell.

In another embodiment of the invention, a "partial" balancing of the cells is provided. Such a partial cell balancing circuit is desirable when the battery pack includes separate terminals for a charger and a load, or when highly efficient energy storage is required. In the partial-balancing configuration, power for the op-amp is the provided by the voltage across the serial cells. An optional blocking diode is then added to prevent discharging the cells into the charger. Transistor switches are included to turn the op-amp off when no charger is coupled to the battery pack. As such, the balancing circuit only operates when a charger is connected. The balancing circuit is turned off when only a load is connected, thereby extending the battery capacity available to the load. It is this turning off that gives rise to the "partial" nature of the balancing. Balancing occurs during charge only.

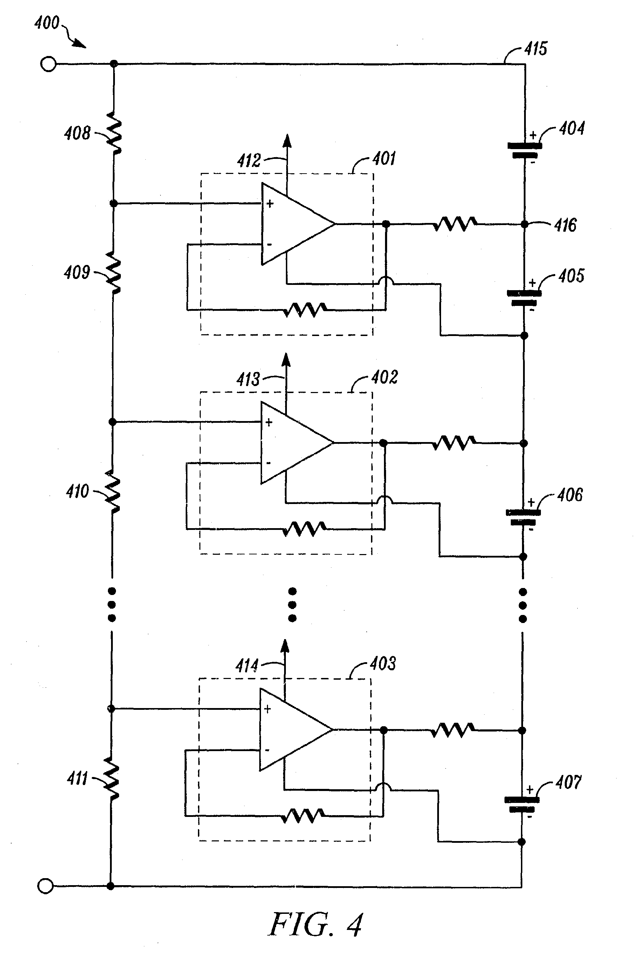

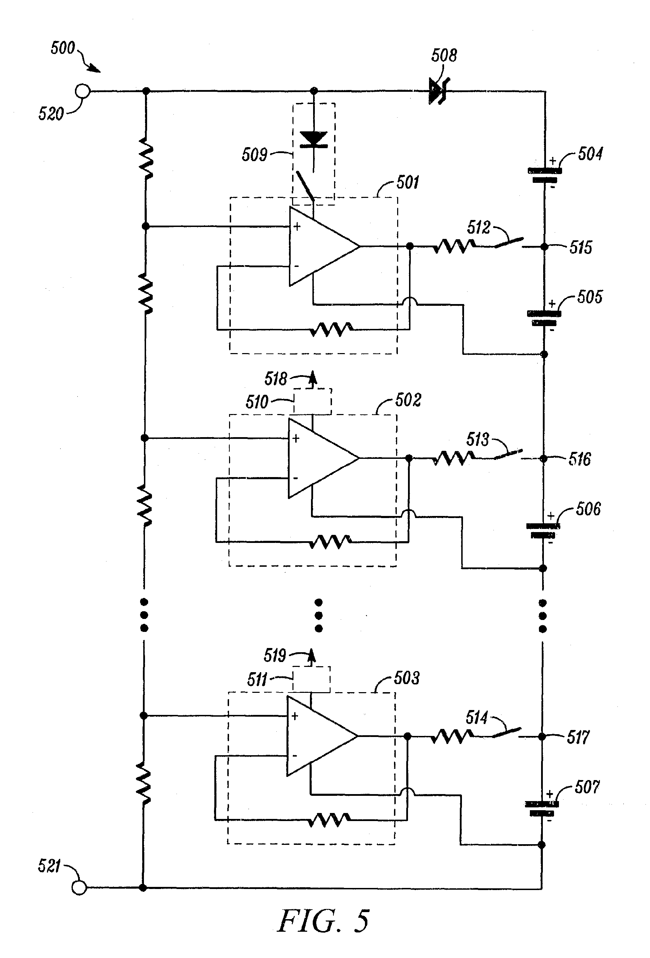

While some of the discussion herein will be directed to a two-cell battery for simplicity, any of the embodiments may be expanded for use in applications having 3, 4 or more cells. This will be discussed further with respect to FIGS. 4 and 5.

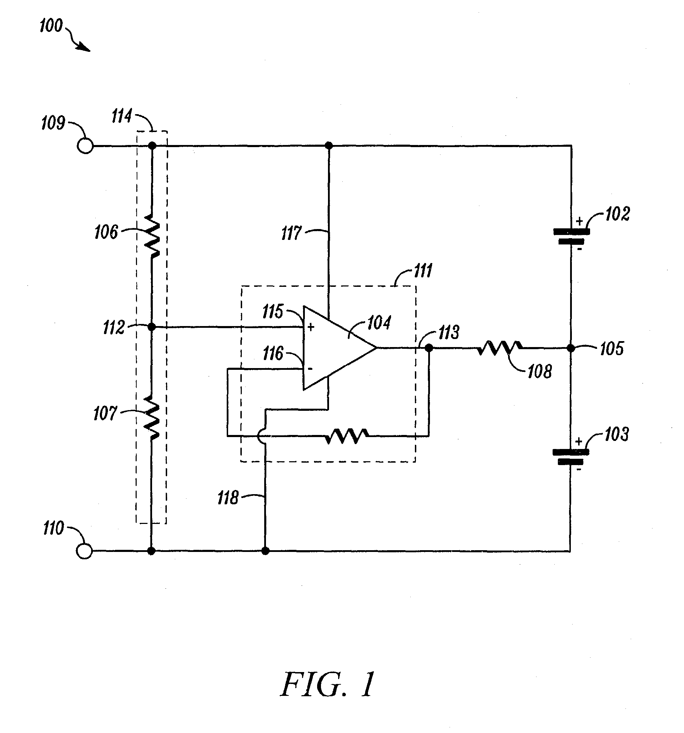

Turning now to FIG. 1, illustrated therein is one preferred embodiment of a two-cell, balancing circuit 100 in accordance with the invention. In this particular embodiment, two cells 102,103 are coupled in series, with a mid-point node 105 between them. A pair of terminals 109,110 are provided that may be coupled to a charger, load or both. The two serially connected cells 102,103 offer a higher output voltage to the terminals 109,110 than would a single cell.

An active circuit 111 having an input 112 and an output 113 ensures that the cells 102,103 stay balanced throughout the charging process. The circuit 111, comprising an operational amplifier or "op-amp" 104 in this embodiment, is capable of sourcing or sinking current, as necessary, to keep the cells 102,103 balanced. The output 113 is coupled to the midpoint node 105 through an optional, serially connected current limiting resistor 108. While an op-amp is preferred due to its low cost and robustness, it will be clear to those of ordinary skill in the art having the benefit of this disclosure that other devices, like comparators and voltage controlled current sources, may also be substituted.

A reference voltage is established at the input 112 by way of a voltage divider 114 coupled across the two cells 102,103. In its simplest form, the voltage divider 114 comprises a resistor-divider having two resistors 106,107 coupled in series. In one preferred embodiment, the voltage divider divides the overall cell voltage generally in half (neglecting tolerances of components) by employing resistors 106,107 having equal impedances. Other reference voltages, of course, may be established by varying the impedances of these resistors 106,107. For example, if cells of different chemistries are used, they may have different termination voltages. In that case, the resistors would have different impedances.

In any event, the reference voltage will be a division of the voltage across the cells. For cells of the same type, the reference will preferably be between 40 and 60 percent of the overall voltage of the series cells. Said differently, to keep the cells charging equally, it is preferable that the resistor 106,107 values are within 10 percent of each other. The reference voltage is proportional to the voltage across the cells 102,103, in that when the voltage across the cell pair increases, the reference voltage increases, and vice versa.

When the reference voltage at node 112 exceeds the voltage at the midpoint node 105, the output 113 sources current into the midpoint node 105. This sourcing of current causes the current flowing through cell 103 to be greater than the current flowing through cell 102, thereby charging cell 103 more rapidly than cell 102. In effect, when the voltage across cell 103 falls below the voltage across cell 102, current is added to cell 103 to help it "catch up" to cell 102.

When the voltage at the midpoint node 105 exceeds the reference voltage at node 112, the output 113 sinks current from the midpoint node 105, thereby causing less current to flow through cell 103 than through cell 102. The net result is that cell 103 still charges, but charges more slowly than cell 102, thereby allowing cell 102 to catch up to cell 103.

Examining the op-amp 104 of FIG. 1 more closely, in this embodiment, the op-amp 104 is connected in a unity gain configuration. It will be clear to those of ordinary skill in the art having the benefit of this disclosure that non-unity gain may be used to increase or decrease the current that is sourced or sunk to or from the midpoint node 105. The op-amp 104, which has an inverting input 116, non-inverting input 115 and output 113, has the reference voltage of node 112 coupled to the non-inverting input 115. The output 113 is coupled to the non-inverting input 116 such that the op-amp 104 will work to ensure that the voltage at the midpoint node 105 stays at equilibrium with the reference voltage at node 112.

Power is required for the op-amp 104 to function. This power is supplied through the op-amp's power node 117 and return node 118. The power node 117 is coupled to the cathode of cell 102, and the return node 118 is coupled to the negative terminal, or anode, of cell 103. Said differently, for a two cell pair, the return node 118 is coupled to the anode of one of the two cells, and in particular, the anode that is not coupled to the midpoint node 105 (i.e. the anode of cell 103).

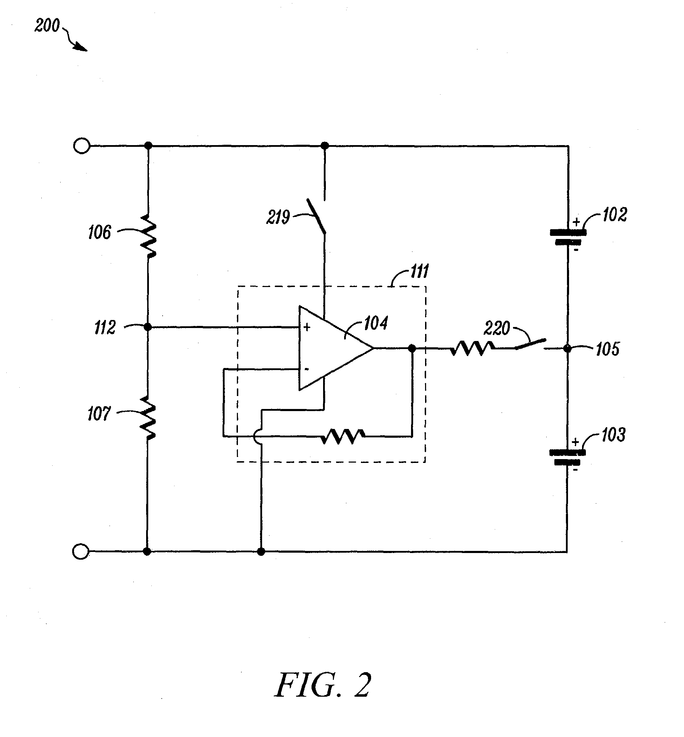

As noted in the preceding paragraph, power is required for the op-amp to function. Since it is sometimes not desirable for anything other than the load to draw power from the cells, it may be advantageous to deactivate the cell balancing circuit when a charger is not attached so as to maximize the battery capacity of the overall battery pack. Turning now to FIG. 2, illustrated therein is one embodiment of a partial cell balancing circuit that does just that.

The circuit 200 of FIG. 2 is similar in layout and function to that (circuit 100) of FIG. 1, and includes the same components with some additions. As with circuit 100, two cells 102,103 are coupled at the midpoint node 105. The op-amp 104 provides a cell balancing function by ensuring that a reference voltage at node 112, established by resistors 106 and 107, stays at equilibrium with the voltage at the midpoint node 105. This equilibrium is maintained by the op-amp's ability to source and sink current into the midpoint node 105.

To ensure that the cell balancing circuit 111 is only operational when a charger is connected, two switches 219,220 have been added to the circuit 200. When a power source is connected to the battery pack, switch 219 closes to provide power to the op-amp 104. Switch 220 also closes to allow current to source and sink to and from the midpoint node 105. When the charger is removed, switches 219 and 220 open, thereby disconnecting the cell balancing circuit 111 from the cells 102,103.

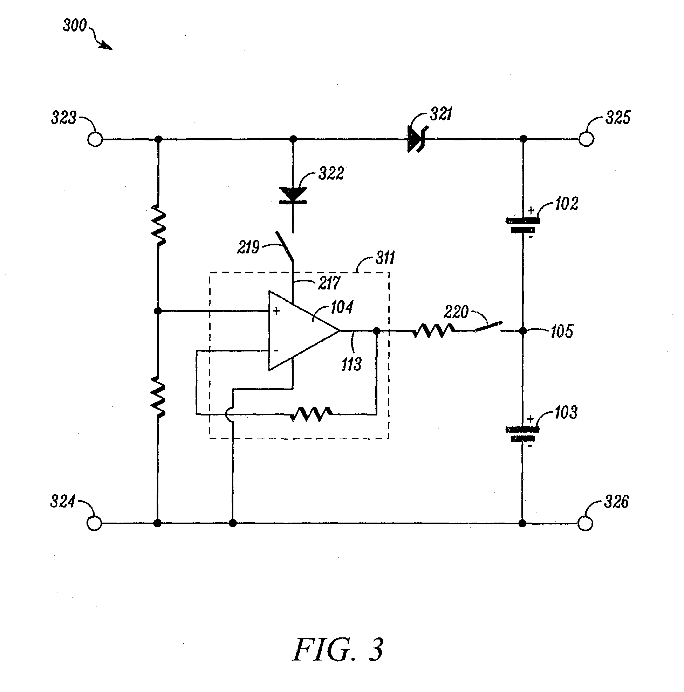

While the ideal switches 219,220 of FIG. 2 prevent the balancing circuit 111 from drawing power from the cells 102,103 in the absence of a charger, in practice some leakage currents may circumvent the switches. For example, if MOSFET transistors are used for switches 219,220, a parasitic diode exists from source to drain that is inherent from the manufacturing process. Additionally, real op-amp integrated circuits may have internal components, for example those to prevent damage from electrostatic discharge, which may allow leakage currents to flow. If it is imperative that all the energy stored in the cells be delivered to the load, additional components may be employed to ensure that the balancing circuit is completely disconnected from the cells. These additional components are shown in FIG. 3.

Turning to FIG 3, illustrated therein a cell balancing circuit 300 that ensures that the active circuit 311 is disconnected from the cells when no charger is present. In addition to the switches 219,220 shown in FIG. 2, a pair of optional diodes 321,322 ensure that the op-amp 104 draws no power in the absence of a charger.

Another difference between the circuit 300 of FIG. 3 and the circuit 200 of FIG. 2 is the number of terminals. The circuit 300 includes a first pair of terminals 323,324 for a charging device, and a second pair of terminals 325,326 for a load. Optional blocking diode 321 ensures that the cells 102,103 do not discharge through the charging terminals 323,324. Optional blocking diode 322 ensures that no current flows from the midpoint node 105, through the parasitic diode of switch 220, into the output 113 of the comparator 104 out the power node 217, through the parasitic diode of switch 219, to the power terminal 323.

Turning now to FIG. 4, illustrated therein is a cell balancing circuit 400 that accommodates more than two cells. As noted in the discussion of FIG. 2, the exemplary two-cell embodiment can be extended to accommodate any number of cells. Circuit 400 illustrates one such an extension of circuit 200.

A first active circuit 401 monitors the balance of cells 404,405. A second active circuit 402 monitors the balance of cells 405,406. This arrangement of one active circuit to a pair of cells extends on for the desired number of cells. For example, if cell 407 is the Nth cell in a string, then active circuit 403 would monitor the balance of cell 407 and the (N-1)th cell. The operation of the active circuits is the same as with circuit 200 of FIG. 2. Note for the cells to balance equally, resistors 408-411 should have equivalent resistor values. Experimental testing has shown that 1MΩ resistors work well, as they keep the current required to establish the reference voltages small.

Note that the power nodes 412,413,414 of the active circuits 401,402,403 may be all coupled to the cell stack voltage, which is present at node 415. Alternatively, the power nodes 412,413,414 may be coupled across only the cells they balance. For example, since active circuit 402 monitors cells 405 and 406, power node 413 may be coupled to node 416 rather than node 415. The advantage of coupling the power node across only the cells being balanced is that a low-voltage op-amp, which can be less expensive, may be used.

Turning now to FIG. 5, illustrated therein is a partial cell balancing circuit applied to a battery pack having more than two cells. Active circuits 501,502,503 monitor and balance cells 504,505,506,507. As with the circuit of FIG. 3, switches 512,513,514 ensure that the outputs of the active circuits 501,502,503 are disconnected from the cells 504,505,506,507 when no charger is present. Similarly, diode-switch combinations 509,510,511 ensure that the active circuits 501,502,503 do not draw power from the cells 504,505,506,507 in the absence of a charger. Blocking diode 508 prevents discharge of the cells through the charging terminals 520,521. As with the circuit of FIG. 4, the power terminals in FIG. 5, e.g. terminals 518,519, may be coupled either to the voltage present at the top of the cell stack or just across the cells that the corresponding active circuits, e.g. 502,503, monitor and balance.

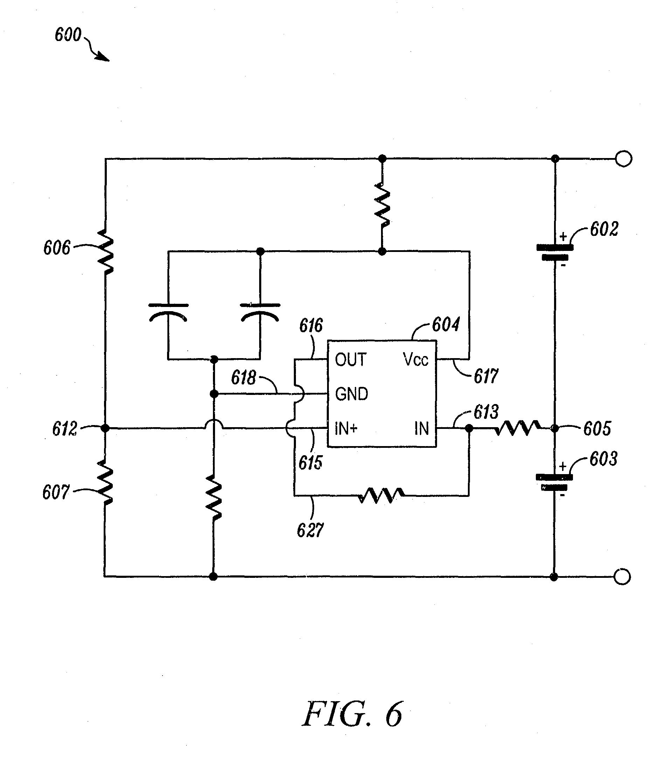

Turning now to FIG. 6, illustrated therein is a cell balancing circuit tested in simulation. Cells 602,603 are coupled at a midpoint node 605. An op-amp 604, like the TLV2401 manufactured by Texas Instruments for example, having an inverting input 616, a non-inverting input 615, an output 613, a power node 617 and a ground node 618, is coupled to the cells 602,603. The arrangement is such that the non-inverting input 615 is coupled to a reference voltage at node 612, established by resistors 606,607, and the output 613 is coupled to the midpoint node 605. Feedback connection 627, comprising a resistor coupled between the inverting input 616 and output 613, configures the op-amp 604 in a unity gain configuration. The op-amp 604 sources and sinks current to and from the midpoint node 605 to keep the reference voltage at node 612 in equilibrium with the voltage at the midpoint node 605.

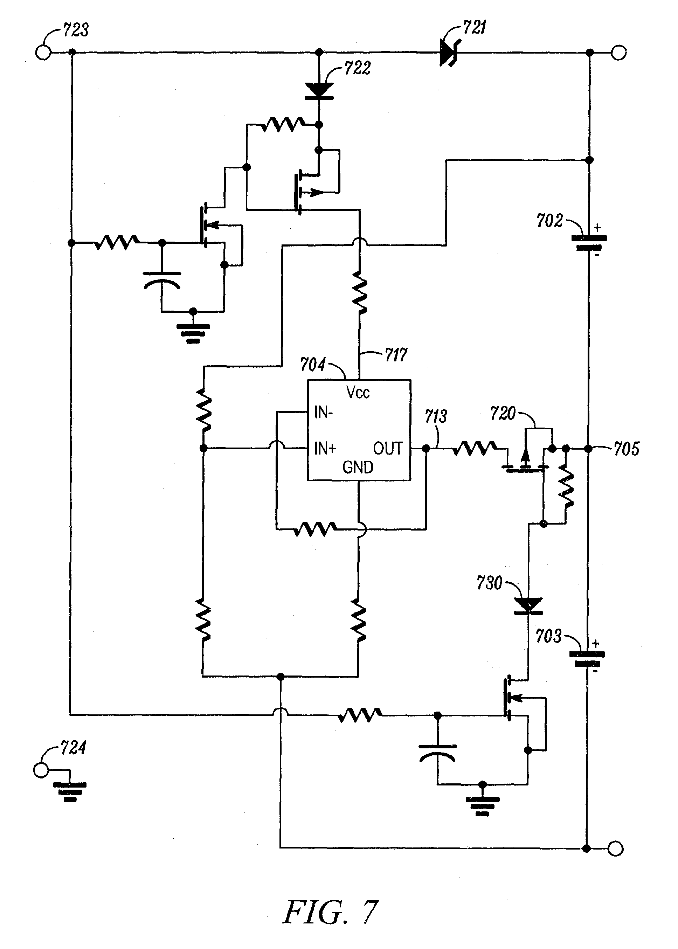

Turning now to FIG. 7, illustrated therein is a partial balancing circuit akin to the circuit 300 of FIG. 3, that was built and tested in the lab. Two cells 702,703 are coupled together at midpoint node 705. An op-amp 704, like the LM321 manufactured by National Semiconductor for example, is configured as was the op-amp 604 of FIG. 6, and functions in the same manner.

To ensure that the op-amp 704 is disconnected from the cells in the absence of a charger, MOSFET switches 719 and 720 are coupled serially with the power node 717 of the op-amp 704 and the output 713 of the op-amp 704, respectively. To block any leakage currents, blocking diodes 722 and 730 are coupled to switches 719 and 720, respectively. Diode 721 ensures that the cells 702,703 do not discharge through the charger terminals 723,724.

While the preferred embodiments of the invention have been illustrated and described, it is clear that the invention is not so limited. Numerous modifications, changes, variations, substitutions, and equivalents will occur to those skilled in the art without departing from the spirit and scope of the present invention as defined by the following claims.

## Claims

1. A cell balancing circuit, comprising:
a. at least two cells, wherein the at least two cells are coupled at a midpoint node;
b. a circuit having an input and an output, wherein the output is capable of sourcing or sinking current, further wherein the output is coupled to the midpoint node; and
c. a reference voltage coupled to the input;
wherein the reference voltage is proportional to a voltage across the at least two cells;
further wherein when the reference voltage exceeds a voltage at the midpoint node, the output sources current;
further wherein when the voltage at the midpoint node exceeds the reference voltage, the output sinks current.

2. The circuit of claim 1, wherein the reference voltage is between 40% and 60% of the voltage across the at least two cells.

3. The circuit of claim 1, wherein the circuit having an input and an output is selected from the group consisting of amplifiers, comparators, and voltage controlled current sources.

4. The circuit of claim 3, wherein the circuit having an input and an output comprises an amplifier having a non-inverting input, an inverting input, wherein the non-inverting output is coupled to the reference voltage.

5. The circuit of claim 4, wherein a resistor is coupled serially between the inverting input and the output.

6. The circuit of claim 3, wherein the circuit having an input and an output comprises an amplifier having a power node and a return node, wherein the return node is coupled to a negative terminal of one of the at least two cells, that negative terminal not being coupled to the midpoint node.

7. The circuit of claim 1, wherein a resistor is coupled serially between the output and the midpoint node.

8. A cell balancing circuit, comprising:
a. at least two cells, each cell having an anode and a cathode, wherein the at least two cells are coupled serially such that an anode of a first cell is electrically coupled to a cathode of a second cell at a midpoint node;
b. an amplifier having at least one input and at least one output, wherein the at least one output is coupled to the midpoint node; and
c. a voltage divider coupled across the at least two cells, the voltage divider having a divided voltage coupled to the at least one input;
wherein when the divided voltage exceeds a voltage at the midpoint node, the amplifier sources current;
further wherein when the divided voltage at the midpoint node exceeds the reference voltage, the amplifier sinks current.

9. The circuit of claim 8, wherein the voltage divider comprises at least two serially coupled resistors.

10. The circuit of claim 9, wherein the two serially coupled resistors have impedance values within 10% of each other.

11. The circuit of claim 8, wherein the amplifier is configured in a unity gain configuration.

12. The circuit of claim 8, wherein the amplifier comprises an inverting input and a non-inverting input, and a resistor is coupled between the inverting input and the at least one output.

13. The circuit of claim 8, wherein a resistor is coupled between the at least one output and the midpoint node.

14. A battery pack comprising the circuit of claim 8.

15. The circuit of claim 8, wherein the amplifier comprises a power node and a return node,
wherein the return node is coupled to the anode of the second cell.

16. The circuit of claim 15, wherein the power node is coupled to the cathode of the first cell.

17. A battery pack, comprising:
a. at least two cells coupled together at a midpoint node; and
b. an active circuit coupled to the at least two cells, the active circuit being capable of sourcing current into, or sinking current from, the midpoint node; and
c. a scaled voltage coupled to the active circuit, wherein the scaled voltage is proportional to a voltage across the at least two cells;
wherein when the scaled voltage is above a voltage at the midpoint node, active circuit sources current;
further wherein the scaled voltage is below the voltage at the midpoint node, the active circuit sinks current.

18. The circuit of claim 17, wherein the scaled voltage is generated by a resistor divider.

19. The circuit of claim 17, wherein the active circuit comprises an amplifier having a power node and a return node, wherein the return node is coupled to an anode of the cell having a cathode coupled to the midpoint node.
